Europäisches Patentamt

European Patent Office

Office européen des brevets

(11) Publication number: **0 372 455**
**A2**

# EUROPEAN PATENT APPLICATION

(21) Application number: **89122331.5**

(22) Date of filing: **04.12.89**

(51) Int. Cl.⁵: **A46B  13/02**

(30) Priority: **05.12.88 IT 2285388**

(43) Date of publication of application:
**13.06.90 Builetin  90/24**

(84) Designated Contracting States:
**DE ES FR GB**

(71) Applicant: **Ciatti, Maurizio**
**Via Conventino 10**
**I-21100 Varese(IT)**

(72) Inventor: **Ciatti, Maurizio**
**Via Conventino 10**
**I-21100 Varese(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Rotary bristle toothbrush.**

(57) A toothbrush in which the bristles (3) are supported by a rotary body (4) which can rotate about its axis (W). This body is rotated by a d.c. electric motor (5) housed in a handle (2) on which there is arranged a switch (30) to be operated by the user for actuating the electric motor (5) so as to cause the bristle bearing body (4) to rotate either clockwise or anticlockwise.

Fig.2

EP 0 372 455 A2

## Rotary-bristle-toothbrush

The present invention relates to a toothbrush.

A lot of toothbrushes are already known on the market, one of which comprises a bristle bearing body which is operated, in a known way, by an electric motor for swinging in both directions through 180° about its axis, so as to also cause the bristles to rotate on two opposite circumference arcs.

While such a toothbrush is rather effective in cleaning teeth, it has the drawback that, since its bristles are displaced on the teeth from the top to the bottom and from the bottom to the top thereof, the tooth patch will be firstly displaced toward the end free portion of each tooth but successively it will be driven again, at least in part, toward the gums.

Such a reciprocating movement along the teeth, moreover, can cause the bristles to contact the user gums, which represents a very serious drawback, mostly if the user has a dental prosthesis: in fact, in this case, the return movement of the bristles against the gums can cause the latter to recede with a consequent loss of the prosthesis restraining capability of said gums.

Accordingly, the main object of the present invention is to overcome the above mentioned drawback by providing such a toothbrush of the rotary bristle type which can properly clean the teeth.

Another object of the invention is to provide such a rotary bristle toothbrush which can also be safely used by person having dental prostheses or affected by gum diseases.

According to one aspect of the invention, the above and other objects, which will be apparent to those skilled in the art, are achieved by a toothbrush comprising a handle and bristles adapted to clean teeth, characterized in that said bristles radially project from a bristle bearing body, said body being rotatively driven about a longitudinal axis by a d.c. electric motor housed in said handle, means being moreover provided associated with electric circuit of said electric motor for reversing said electric motor turning direction.

The invention will become more apparent from the following description with reference to the accompanying exemplary but non limitative example, in which:

Fig. 1 is a top plan view of the toothbrush according to the invention;

Fig. 2 is a cross-sectional view along the line II-II of figure 1;

Fig. 3 is an enlarged view of the part indicated at A in figure 2; and

Fig. 4 is a detail view of a portion of a modification of the toothbrush according to the invention.

With reference to the above figures, the toothbrush according to the invention has been indicated at 1 and comprises a handle 2 and bristles 3.

According to the invention, the bristles 3 radially project from a rotary body 4 which can turn about its longitudinal axis W as driven by a d.c. electric motor 5 housed in said handle 2.

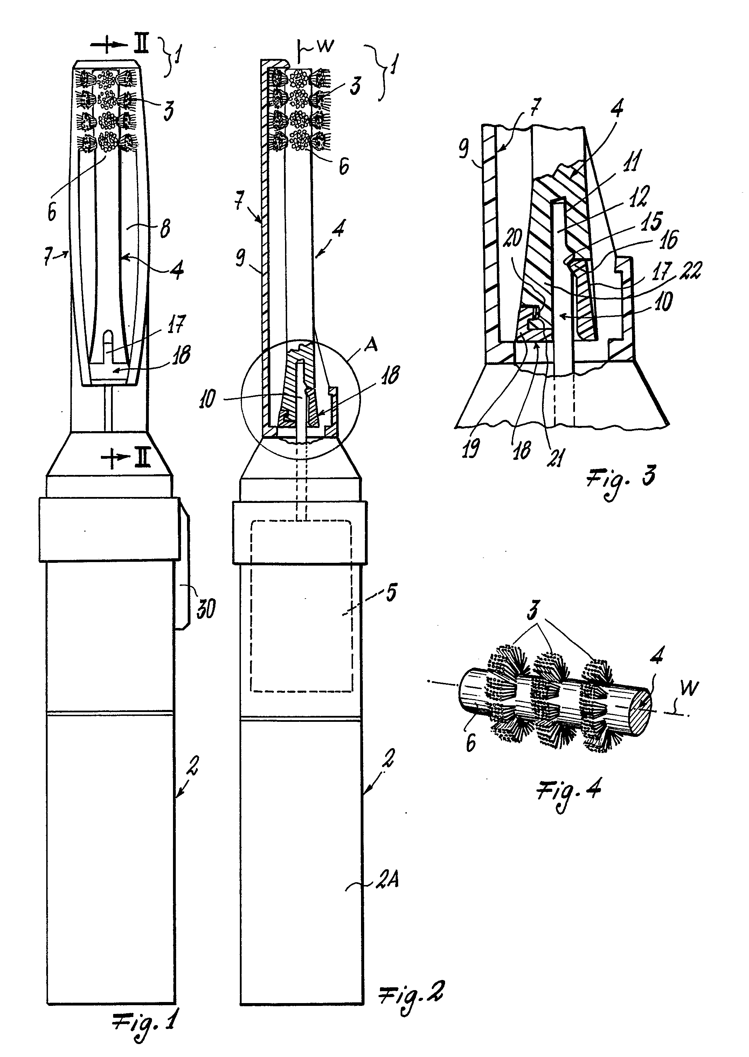

More specifically the bristles 3 are arranged at one end 6 of the body 4; these bristles can be circumferentially or helically arranged on said end 6, as shown in figure 4. The body 4 has an elongated shape and is arranged in a box-like body 7 provided with an opening 8 therefrom said bristles 3 project. This element 7, which is coupled to the handle 2 by any known means (e.g. by resilient means supported by said element and snap engaging with suitable seats formed on said handle), operates to protect with its body 9 the inner surface of the user cheek from the bristles as the toothbrush is operated.

As stated, the body 4 is rotatively driven by the electric motor 5. To that end, the motor 5 comprises an output shaft 10 which cooperates with a seat 11 formed in the body 4. More specifically the output shaft 10 comprises a recessed end portion 12 adapted to rotatively cooperate with the mentioned seat 11 so as to rotatively drive the body 4. As it should be apparent, at the coupling zone of said shaft 10 and handle 2 conventional sealing elements (not shown) should be provided for preventing water from contacting, as the toothbrush is operated, the electric motor 5 and the other electric contacts included in said handle. Near said portion 12 there is provided on the shaft 10 a recess 15 adapted to cooperate with a cranck end 16 of a resilient arm 17 of a ring 18; said arm 17 and ring 18 operating as axial restraining elements for axially holding the shaft 10 within the body 4. More specifically, the ring 18 is provided with an annular body 19 on the wall of the bore of which there are provided resilient elements 20 inward projecting and adapted to cooperate with an annular recess 21 formed in the end 22 of the body 4 and facing the handle 2.

The motor 5 is coupled to a conventional transformer-rectifier assembly (not shown) or the like power supply means, if the power supply to the motor is derived to the mains; alternatively said motor can be actuated by conventional batteries arranged in a portion 2A of the handle 2, which portion, if the motor is battery supplied, can be disengaged from the remaining part of the handle.

The operation of the electric motor, finally, can be controlled by the user by means of a slider switch 30 controlling in a known way the electric circuit of the motor 5 so as to reverse the operating direction of the latter.

The toothbrush according to the invention is operated as follows. After having brought the bristles 3 to their use position, the switch 30 is actuated so as to cause the body 4, together with the bristle, to rotate.

After having cleaned, for example, the teeth of the top portion of the mouth, the body 4 is stopped and the bristles are brought onto the teeth of the bottom part of the mouth. Then the switch is operated again so as to again drive the body 4 and bristles rotatively. This rotary movement, as it should be apparent, would occur in an opposite direction to the disclosed movement.

A toothbrush made according to the present invention allows for the tooth surface as well as the gum groove to be perfectly cleaned.

Moreover, by properly operating the subject toothbrush, the bristles will advantageously massage the gums, while preventing them from being moved away from the teeth, so to prevent that bacteric patch residues will be driven into the gum groove.

According the disclosed toothbrush can be safely used by persons affected by tooth diseases as well as by persons having fixed dental prostheses or endosseous dental prostheses.

**Claims**

1. A toothbrush having a handle (2) and bristles (3) for cleaning teeth, characterized in that said bristles (3) radially project from a bristle bearing body (4), said body being rotatively driven about a longitudinal axis (w) by a d.c. electric motor housed in said handle (2), means being moreover provided (30) associated with electric circuit of said motor (5) for reversing said motor turning direction.

2. A toothbrush according to claim 1, characterized in that said body (4) and bristles (3) associated therewith are rotatively driven in a box-like element (7) coupled to said handle (2), said box-like element (7) having an opening (8) therefrom said bristles (3) extend.

3. A toothbrush according to claim 1, characterized in that said bristles (3) are evenly arranged on said body (4).

4. A toothbrush according to claim 1, characterized in that said bristles (3) are helically arranged on said body (4).

5. A toothbrush according to claim 1, characterized in that said bristles (3) are unevenly arranged on said body (4).

6. A toothbrush according to claim 1, characterized in that said d.c. electric motor (5) is power supplied by batteries arranged in a removable portion (2A) of said handle (2).

7. A toothbrush according to claim 1, characterized in that said d.c. electric motor (5) is power supplied from the mains, a transformer-rectifier assembly being associated with said electric circuit of said motor.

8. A toothbrush according to claim 1, characterized in that within said removable portion (2A) of said handle (2) there is arranged an accumulator for power supplying said d.c. electric motor (5).

9. A toothbrush according to claim 1, characterized in that said bristle bearing body (4) is provided with a seat (11) adapted to receive a recessed end portion (12) of output shaft (10) of said d.c. electric motor (5) for rotatively coupling said shaft (10), said shaft (10) including a recess (15) cooperating with coupling means (16,17) for axially restraining said body (4) to said shaft (10).

10. A toothbrush according to claim 9, characterized in that said coupling means comprise an arm (17) provided with a cranck end (16) cooperating with said recess (15) of said shaft (10), said arm (17) being rigid with an annular body (19) of a ring element (18) arranged about one end (22) of said body (4) facing said handle (2), said annular body (19) being provided on a wall of the bore thereof with resilient means (20) adapted to cooperate with an annular recess (21) in said end (22) of said body (4).

11. A toothbrush according to claim 1, characterized in that said means for reversing the turning direction of said body (4) comprise a switch (30) arranged on said handle (2) and operating on said electric circuit of said d.c. electric motor.

EP 0 372 455 A2

Fig. 1

Fig. 2

Fig. 3

Fig. 4